(19) 

Europäisches
Patentamt
European
Patent Office
Office européen
des brevets

(11) **EP 2 157 544 A1**

(12) **EUROPEAN PATENT APPLICATION**

(43) Date of publication:
24.02.2010 Bulletin 2010/08

(51) Int Cl.:
*G06T 5/00* (2006.01)  *G06T 5/50* (2006.01)

(21) Application number: 08016988.1

(22) Date of filing: 26.09.2008

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: 01.08.2008 EP 08013853

(71) Applicant: **Julius-Maximilians-Universität Würzburg**
**97070 Würzburg (DE)**

(72) Inventors:
• **Esch, Thomas, Dr.**
**80335 München (DE)**
• **Schenk, Andreas**
**76131 Karlsruhe (DE)**

(74) Representative: **Vossius & Partner**
**Siebertstraße 4**
**81675 München (DE)**

(54) **System for adaptive removal of speckle noise in digital images and generation of a colour composite product based on automated analysis of speckle characteristics**

(57) The present invention is directed to a method of adaptive removal of speckle noise in digital images. The method comprises receiving a digital image, calculating a global estimate for the ratio between standard deviation and mean value of the brightness or intensity of said image and calculating a local estimate for the ratio between standard deviation and mean value of the brightness for predetermined first regions of said image. According to the method, the difference between the global estimate and the local estimate for said first regions is calculated and said first regions are classified depending on the calculated difference.

FIG. 1

**Description**

The invention relates to methods and systems for the enhanced processing of digital images recorded by, e.g., active, airborne and/or spaceborne imaging microwave sensors designed, for example, as a Synthetic Aperture Radar (SAR). The proposed system generates value-added image products that facilitate the visual and computer-aided interpretation of those images.

Most airborne and spaceborne radar imaging systems are designed as SAR sensors. In SAR imaging technology the sensor transmits a coherent microwave radio signal towards the earth's surface and detects the backscattered portion of the transmitted radiation. Thus, SAR systems are capable of acquiring data at day and night, independently of the weather or environmental conditions which is a distinct advantage compared to optical imaging systems.

Contrary to optical data the visual and computer-aided interpretation of SAR imagery is made difficult by both the appearance of speckle noise and the limited spectral resolution of radar data. Speckle is caused by constructive and destructive interference from multiple scattering within each resolution cell of the imaging system. The speckle effect significantly degrades the quality of the received SAR signal and appears as a grainy texture in the image. The spectral resolution of a remote sensing sensor refers to the number of spectral bands. In case of conventional SAR systems the spectral resolution is limited to a single band. Hence, for non-polarimetric SAR systems distinct objects, features or surface types have to be discriminated by differences in their intensity or textural characteristics. Nevertheless, due to speckle noise and ambiguities of the radar backscattering signal the significance of intensity and texture information in terms of image analysis and interpretation is limited.

The SAR speckle signal is often referred to as noise. Nevertheless, SAR speckle features are typical statistical properties which differ from other phenomena occurring in the context of non-coherent imaging systems and are also referred to as image noise.

A conventional parameter to describe multiplicative speckle noise and the local development of speckle in SAR data respectively is the so-called coefficient of variation (CoV). The CoV represents the ratio of standard deviation and mean value within a defined neighbourhood. Information on the CoV is used by most adaptive speckle suppression procedures assuming a multiplicative noise model in order to optimally adapt the filter effect to the local heterogeneity of the radar image. Subsequently, regarding the terminology for the abbreviation "CoV" it will be differentiated between the globally estimated CoV indicated by the variable C and a locally estimated CoV denoted as $c_{x,y}$.

Filter techniques presuming multiplicative noise can be classified into locally adaptive and non-adaptive approaches. Since the interference of true image structures by speckle noise is a spatially varying phenomenon, the performance of non-adaptive filters such as the Lee Sigma Filter ["Speckle suppression and analysis for synthetic aperture radar images", Optical Engineering Vol.25 No.5, 1986, 636-643] is suboptimal. Either the speckle is globally eliminated - inevitably including the blurring of true objects and structures - or speckle removal is still insufficient.

Frost et al. (1981):"An adaptive filter for smoothing noisy radar images", Proceedings of the IEEE, Vol. 69, No. 1, present an image processing technique for adaptive speckle reduction. Based on the assumption of multiplicative noise with stationary statistics, a local weighting factor is estimated. A moving window with a radial decreasing kernel function is used to remove speckle noise. Locally derived parameters of the speckle statistics based on the global CoV determine the filter kernel shape. For regions with ideally developed speckle the method acts as a low pass filter. For structured regions with prominent features and undeveloped speckle the weight of the central region of the filter kernel increases with respect to the outer pixels in order to preserve the original image information. The modulated filter kernel can be described by radial, symmetric functions.

Lee et al. (1980): "Digital image enhancement and noise filtering by use of local statistics", IEEE Trans. Pattern Analysis and Machine Intelligence, Vol. 2, No.2, suggest a different approach to reduce speckle noise inherent to SAR imaging systems. The filtered image is regarded as the weighted sum of the original image and its mean filtered version. The weighting function reflects the local development of speckle. For ideally developed speckle in homogeneous regions the original image is replaced by its local mean whereas in structured areas the original image is preserved. The weighting function depends on local statistics whereas the global CoV - characterising the speckle noise level for the entire image - has to be determined manually. In order to improve the performance a multiple application of the filtering system is proposed.

Most of the established adaptive speckle suppression filters assuming multiplicative noise - including the approaches described afore - determine a global CoV based on the standard deviation and the mean of the complete image in order to define the scene-specific level of speckle noise. The local adaptation of the filter effect is then based on a comparison between the local CoV - calculated within a moving window - and the global CoV characterising the scene-specific heterogeneity of fully developed speckle noise. Thereby the filter effect is minimized in regions with a significant deviation between local and global CoV - indicating the presence of true structuring - and maximised for areas featuring a minimal difference.

Since every image contains regions with true structuring - where the speckle is superposed by directed backscatter - a global estimation of the CoV based on the complete radar image will inevitably involve a significant deviation from the true heterogeneity of image regions solely featuring fully developed speckle. Hence, Lee et al. (1992) propose a method for the individual calculation of the scene-specific coefficient of variation by means of a density function derived from a 2D feature plot of the standard deviation and the mean value in a certain neighbourhood. ["Unsupervised Estimation of Speckle Noise in Radar Images", International Journal of Imaging Systems and Technology, Vol. 4, 298-305]

Theoretically, the scene-dependent CoV can also be derived from the inverse of the equivalent number of looks (ENL) by:

$$ENL = L_a + L_r \doteq 1/CoV \qquad (1)$$

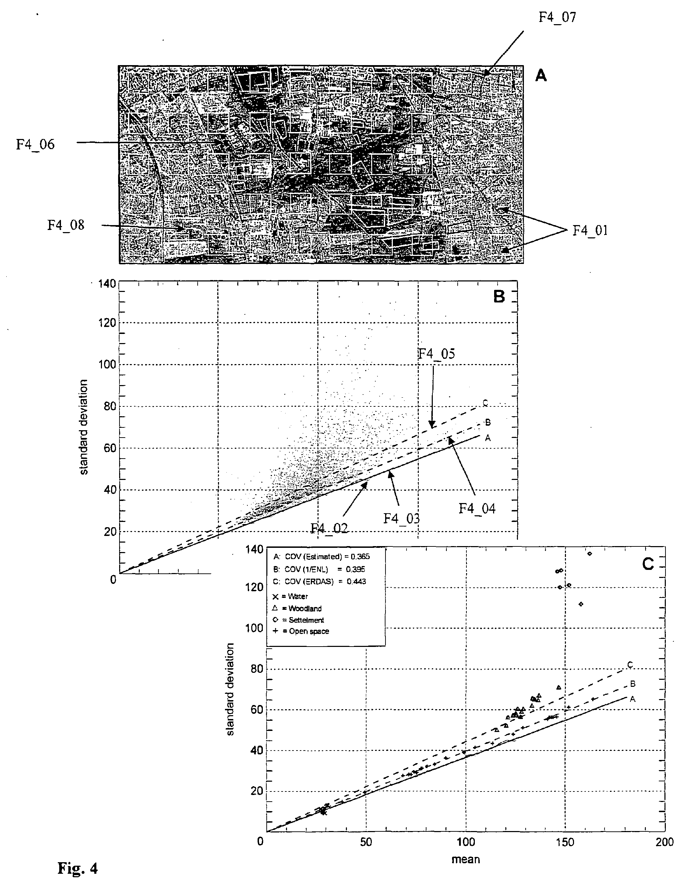

with $L_a$ and $L_r$ defining the number of looks in azimuth and range that were used in the context of the raw data processing. For single look processing the coefficient of variation equals a value of one. Equation (1) provides a method to calculate the CoV based on the number of looks chosen in the context of the data processing. However, information on the settings for the multi-looking is not necessarily provided to the customer. Moreover, the derivation of the CoV based on the ENL yields a purely theoretical value. In the context of according tests the comparison between the CoV derived from the ENL and a local estimation based on a number of ideal, manually defined samples show a significant difference (see Fig. 4).

In consideration of the problems described above, there is a need for an automated estimation of the scene-specific CoV, which provides certain advantages, particularly in terms of both an improved adaptation of the filter effect according to the local heterogeneity and the independency from accurate metadata. It is thus an object of the present invention to provide an improved method of and an improved device for adaptive removal of speckle noise in digital images such as, e.g., SAR images. It is a further object to provide a method of and a device for generating an improved digital image, e.g. an improved digital SAR image.

These objects are achieved by the features of the claims.

Hence, this invention, i.a., introduces a fully automated speckle analysis module (speckle analyser) assuming multiplicative noise which derives the scene-specific level of heterogeneity for fully developed speckle based on a feature space defined by the standard deviation and the mean value. Thereby the procedure preferably performs a linear fit through the minimum CoVs estimated on the basis of representative sample areas within the SAR image. When the global CoV is estimated on the basis of sample areas identified by means of the proposed fully automated procedure the derived values are almost identical to the estimates manually derived from ideal samples.

In addition to the novel approach towards the characterisation of the scene-specific level of speckle noise this invention also includes innovations aiming at an enhanced filtering of image heterogeneity due to speckle effects. For that purpose this invention preferably provides a spatially adaptive and at the same time radiometrically selective filter algorithm. The spatial variation of the filter effect (adaptation) depends on the divergence between the local CoV and the according, global ratio derived by the automated speckle analysis. The higher the local difference to the scene-specific CoV of fully developed speckle - the so-called speckle divergence -, the lower is the filter effect. The weighting of individual elements of the filter kernel (selectivity) is neither globally defined nor based on spatial distance from the kernel centre. In fact the weighting is based on the similarity of the intensity of the central pixel and the intensity of its surrounding picture elements.

Existing speckle reduction systems feature a direct link between local heterogeneity and applied filter intensity. Although mathematically correct this implementation involves the generation of artefacts in the filtered SAR image - particularly in case of rapid and small-scale changes in the local speckle characteristics resulting in abrupt alterations of the filter effect. Hence, the proposed invention incorporates specific modules to harmonize the filter control signal and the resulting filter intensity.

By transforming the information on the speckle divergence - which is generated by the speckle analyser and used for the control of the filter function - to an image file and combining this layer with the filtered or original intensity data a value-added colour composite image can be created which highlights the different backscatter behaviour of the imaged objects. Up to now the generation of comparable products required polarimetric or multitemporal SAR data and could not be provided on the basis of one single-polarized intensity image.

The present invention is particularly directed to a method of adaptive removal of speckle noise in digital images, e.g. in digital SAR images. The method comprises receiving a digital (SAR) image, calculating a global estimate (also referred to as global CoV in the present application) for the ratio between standard deviation and mean value of the brightness or intensity of said image and calculating a local estimate (also referred to as local CoV in the present application) for the ratio between standard deviation and mean value of the brightness for predetermined first regions of said image. Each predetermined first region preferably comprises several pixels. Preferably at least one or exactly one particular pixel, e.g. the centre pixel of the first region, is associated to said region. Alternatively, a group of pixels (e.g. comprising nine symmetrically arranged centre pixels) is associated to said region. According to the method, the difference between the global estimate and the local estimate for said first regions is calculated and said first regions are classified depending on the calculated difference. To be more specific, preferably the particular pixel(s) associated to a certain first region is/are classified according to the calculated difference for said first region. In other words, for each pixel or group of pixels of the digital image a first region is defined in order to perform the proposed analysis. Said region may preferably surround said pixel(s) in a predefined manner, e.g., the region may be a square formed, preferably symmetrically, around said pixel(s). According to the calculated difference between global and local estimate for said region, said pixel(s) is/are being classified.

The digital image preferably is an intensity image, i.e. a black and white image. However, other data may be transferred into a suitable intensity image according to the present invention.

The method preferably comprises the step of dividing the image into predetermined, preferably square, first regions or setting those predetermined first regions. The regions have to be large enough, i.e. contain enough pixels, to allow for a reasonable averaging in order to calculate a standard deviation and a mean value of the brightness or intensity of each region. On the other hand, those regions have to be small enough to allow for a sufficiently fine classification of those regions, i.e. to assure that there are defined first regions which solely cover one single surface or land cover type, e.g. only meadow, only built-up area etc. In other words, the size of the first regions should be comparable to or slightly smaller than the true size of the depicted features of interest within the image. Preferable dimensions of those features are between 50m x 50m and 200m x 200m, more preferably between 80m x 80m and 120m x 120m. If one image pixel corresponds to 1 m of the imaged feature,the first region preferably contains between 50 x 50 and 200 x 200 pixels, more preferably between 80 x 80 and 120 x 120 pixels. It will be apparent to the skilled reader that the size of the first regions in pixels will, however, depend on the resolution of the image. Although it is preferred to use quadratic first regions, other shapes of the first regions such as rectangular or circular are also preferred according to the invention.

The step of dividing the image into predetermined, preferably square, first regions is preferably performed by a "moving window". If, for example, each first region comprises exactly one associated pixel, then a first region has to be defined for each pixel of the digital image, e.g. by forming a square symmetrically around said pixel (of course this is not possible for pixels close to the edge of said image). This correspondingly applies to adjacent groups of pixels of a group of pixels, e.g. 3x3 pixels are associated to each region. Accordingly, the regions of two adjacent pixels largely overlap. The first regions form a "moving window" moving along the (pixel) columns and rows of the image. Vice versa, each moving step of the "moving window" defines or determines a pixel associated to the position of the "moving window", i.e. the first region. Thus a correlation between first regions and pixels is given for all or at least almost all pixels of the digital image.

According to a preferred embodiment the method further comprises the step of filtering the image, wherein an adaptive filter is used relying on the classification of said first regions, i.e. relying on the difference between the global estimate and the local estimate of those regions. In other words, the filter characteristics or parameters are adjusted to each of said first regions or to each of the specific pixels associated to said first regions based on the classification of said regions, i.e. based on the difference between the global estimate and the local estimate of those regions.

It is preferred that the method comprises the further step of adjusting the brightness and/or color of each pixel associated to said first regions according to the classification of said first regions. It shall be recognized that the step of adjusting the brightness and/or color is not a mere stretch of the intensity spectrum, but instead refers to the definition or generation of a new image whose pixels receive values according to the respective classification of each pixel or the respective first region. This can include a distortion of the original intensity spectrum. Thus, a mapping is achieved which correlates "visible" image characteristics such as brightness or color with the classification of said first regions. Although the type of speckle pattern might also be visually recognizable information, it will be much easier for a user of such images to analyze color and/or brightness information than to identify whether or not the speckles are fully developed in a certain region.

According to a particularly preferred embodiment the method comprises the step of combining at least two of the following images in order to generate a composite image: the original digital (SAR) image, the filtered image, the original digital (SAR) image with adjusted brightness and/or color, the filtered image with adjusted brightness and/or color. Thus, using the inventive method value added composite images can be provided. For instance, the original digital (SAR) image can be combined with the original digital (SAR) image with adjusted brightness and/or color, e.g. by an overlay technique. Thus, the original information contained within the image is still visible, while additional information is added by the color and/or brightness code and thus contained in the combined image. Thus, a user has at the same time access to the original information of the image and additional characteristics, which were only implicitly present within the speckle pattern of the original picture but now are clearly and immediately apparent, also to the untrained user.

For instance, it turns out that regions with a large difference between global and local estimate for the ratio between standard deviation and mean value of the brightness or intensity are typically regions showing settlements, in contrast to water, woodland or open space. These settlements may not be clearly visible in the original information due to the blurring of the image caused by the speckles. However, if regions having this characteristic feature are colored, e.g., red, the user can easily identify regions containing settlements by locating red areas or spots on the original image.

Of course, other combinations are possible as well. It is in particular preferred to combine the filtered image with the filtered image with adjusted brightness and/or color. This allows for the same identification of certain terrain features such as settlements, woodland and the like while at the same time providing an improved image, in which some amount of the speckle noise has been effectively removed.

According to another preferred embodiment the global estimate for the ratio between standard deviation and mean value of the brightness or intensity is calculated on the basis of second regions of the image, whose standard deviation is minimal for a given mean value range.

According to one embodiment the second regions comprise regions different from the first regions. In this case, the method preferably further comprises the step of dividing the image into predetermined second regions or setting those predetermined second regions. The size of the second regions can be slightly larger or smaller than the size of the first regions, but should preferably be smaller. It is preferred that the size of the second regions corresponds to true sizes of depicted features or objects within the image of preferably between 10m x 10m and 50m x 50m, more preferably between 15m x 15m and 25m x 25m.

According to another embodiment the second regions are a subset of the first regions.

In either case, regions of the image are allocated to sets with similar mean value of brightness. Then, in each set the region having the minimum standard deviation is identified. The second regions consist of all those regions having the minimum standard deviation within each set, respectively. The global estimate can then be calculated, e.g., by fitting a line through the points representing the second regions in a standard deviation versus mean value plot.

This estimate can be further improved if the global estimate is calculated on the basis of those regions of the second regions only, whose local estimate for the ratio between standard deviation and mean value does not significantly differ from the local estimate of second regions with similar mean value. The estimates do not significantly differ as long as the cumulated absolute difference between the local estimate for the given second region and its gradients with respect to the two adjacent estimates is lower than a value of 0.3. Adjacent estimates are those estimates whose mean values define the previous and subsequent interval. Said threshold can be increased iteratively if the number of accepted estimates is smaller than a value of two.

Preferably, the filtering is based on a selective mean filter algorithm. Therein, filtering comprises the steps of estimating a tolerance base, determining an include range and applying the selective mean filter algorithm. According to a preferred embodiment of the present invention, the tolerance base is calculated on the basis of the difference between the global estimate and the local estimate.

However, it should be apparent to the skilled person that other filter algorithms can be used instead without departing from the scope of the present invention. The invention is particularly based on the idea to use an adaptive filter, wherein the filter is adapted on the basis of the local estimate in relation to the global estimate. Since the difference between local and global estimate is linked to certain features of the original image such as terrain features, the adaptive filter is thus responsive to those features. For instance, filtering may be stronger in regions of the image representing forests or grassland while filtering in regions representing settlements may be weaker or even suppressed. In this manner the structure of the image is somewhat amplified and/or clarified.

As described above, the method of the present invention is particular successful due to the described analysis of the speckle characteristics, i.e. the global and local estimates. However, according to another embodiment the inventive concept is employed calculating speckle characteristics by other means.

Accordingly, the present invention is directed to a method of producing an improved digital image such as an improved digital SAR image. The method comprises receiving a digital (SAR) image, calculating speckle characteristics of said image for predetermined regions of said image and classifying said regions depending on the calculated speckle characteristics. The image is then filtered in order to generate a filtered image, wherein an adaptive filter is used relying on the classification of said regions. Subsequently, the brightness and/or color of pixels associated to said regions within the digital (SAR) image and/or the filtered image is adjusted according to the classification of said regions. Finally, at least two of the following images are combined in order to generate a composite image: the original digital (SAR) image, the filtered image, the original digital (SAR) image with adjusted brightness and/or color, the filtered image with adjusted brightness and/or color.

The present invention is further directed to a device for adaptive removal of speckle noise in digital images such as in digital SAR images. The device comprises means for receiving and processing a digital (SAR) image; means for calculating a global estimate for the ratio between standard deviation and mean value of the brightness of said image; means for calculating a local estimate for the ratio between standard deviation and mean value of the brightness for predetermined regions of said image; means for calculating the difference between the global estimate and the local estimate for said regions; and means for classifying said regions and/or of pixels associated to said regions depending on the calculated difference.

Preferably, the device further comprises an adaptive filter based on the classification of said regions.

The present invention is further directed to a device for producing an improved digital image, e.g. an SAR image, comprising means for receiving and processing a digital (SAR) image; means for calculating speckle characteristics of said image for predetermined regions of said image; means for classifying said regions and/or of pixels associated to said regions depending on the calculated speckle characteristics; an adaptive filter based on the classification of said regions; means for adjusting the brightness and/or color of said pixels associated to said regions within the digital (SAR) image and/or the filtered image according to the classification of said regions; and means for combining at least two of the following images in order to generate a composite image: the original digital (SAR) image, the filtered image, the original digital (SAR) image with adjusted brightness and/or color, the filtered image with adjusted brightness and/or color.

Although discussed herein mainly with regard to SAR images, the invention is in general applicable to data received by any coherent imaging system.

The present invention is further elucidated with reference to the following figures:

Fig.1 shows the complete processing chain reaching from the data requirement of a customer to the final value-added image product. The integration of the invention into the processing chain is highlighted.

Fig.2 is a functional block diagram illustrating the design of a preferred embodiment of the device according to the present invention, particularly for performing steps 128 and/or 112 of Fig. 1.

Fig.3 is a functional block diagram illustrating an embodiment of a speckle analyzer according to the present invention.

Fig.4a is an illustrative SAR image used for processing the data shown in Fig. 4b.

Fig. 4b shows a graph of the standard deviation versus mean intensity for certain regions of the SAR image shown in Fig. 4a.

Fig. 4c shows a graph of the standard deviation versus mean intensity for manually selected sample regions of the SAR image shown in Fig. 4a.

Fig.5 is a functional block diagram illustrating an embodiment of a divergence estimator according to the present invention.

Fig.6 is a functional block diagram illustrating an embodiment of a filter module according to the present invention.

Fig.7 is a functional block diagram illustrating an embodiment of a divergence estimator module according to the present invention.

Fig. 8a shows an original SAR image recorded by the German TerraSAR-X satellite system.

Fig. 8b shows the image of Fig. 8a after processing according to the present invention.

Fig. 9a shows an original SAR image recorded by the German TerraSAR-X satellite system.

Fig. 9b shows the image of Fig. 8a after processing according to the present invention.

This invention particularly presents an apparatus that generates value-added SAR image products on the basis of processed single-look or multi-look SAR intensity data in order to improve their visual and computer-aided interpretation. However, the present invention may be utilized in an analogous manner for other digital images and is not restricted to SAR data. I. a. for that purpose the system derives a specific textural feature by analysing the scene specific speckle characteristics. This textural information is used for the removal of speckle noise and the generation of a colour composite image. Both products facilitate a more detailed differentiation between the various object and surface types in the SAR image data.

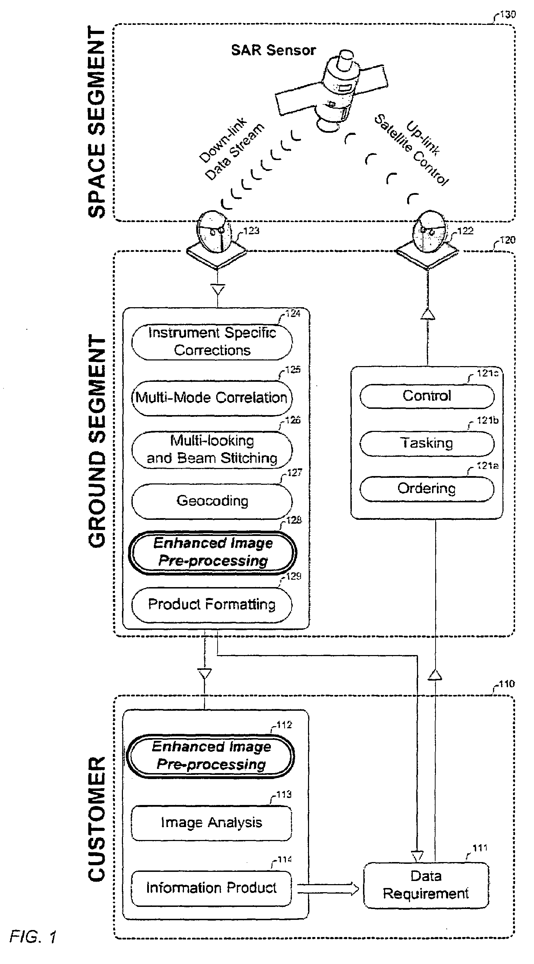

Fig. 1 illustrates the processing chain for the generation of a value-added remote sensing image product exemplified on the basis of a SAR satellite system. The customer identifies a demand on up to date geo-information 111 and formulates this requirement in terms of an order 121a to the ground segment 120 of the SAR satellite. The order specifies the imaging area and the SAR imaging mode and is decoded to satellite tasks 121b. The satellite tasking commands and the flight control commands 121c are transmitted to the space segment 130 by means of a transmitting antenna 122. The data acquisition itself is operated by the SAR sensor. The space segment sends the imaging data stream to the receiving antenna 123 at the ground segment 120. After decryption, instrument-specific corrections are executed 124, e.g. an antenna pattern correction. In the phase of the multi-mode correlation 125 the different operation modes are handled including the geometric correction and the calibration of the instrument phase. The following multi-looking and beam stitching 126 is required in order to achieve the desired quadratic shape of a resolution cell and pixel of the image product respectively. The geocoding 127 facilitates the exact localization of the image data in terms of a cartographic reference system. The enhanced image pre-processing 128 is subject to the submitted patent and includes the analysis of SAR speckle, a speckle filtering and the generation of a colour composite image. The product formatting 129 closes the processing at the ground segment 120 and transports all product annotation data in hierarchical structures for a faster access of the desired image product. After delivery to the customer the user might optionally pre-process 112 the image data prior to the analysis of the SAR image 113 in order to obtain the final value added product 114 - e.g. a thematic map - which provides the required up to date geo-information.

Preferably, the optional pre-processing of the delivered image data by the customer also includes the application of the methods provided by this invention. Thus, the proposed apparatus 112 can also be applied by the customer prior to the image analysis.

The invention particularly proposes an image processing apparatus that aims at the generation of enhanced image products on the basis of single-polarized SAR intensity data. These value-added products facilitate a more effective visual and computer-aided analysis of the digital radar imagery. The approach is based on the automated analysis of local, multiplicative noise statistics whereas this information is used for both the generation of a data product with a significantly reduced level of hindering speckle noise and the creation of a colourised image which allows for a more distinct differentiation of the object and surface types in the SAR image.

The apparatus or device according to the present invention may be implemented at several locations within the complete processing chain shown in Fig.1. The processing chain comprises a space segment 130, a ground segment 120 and a customer 110. The customer 110 addresses an order containing certain data requirements 111 to the ground segment 120, which takes care of the ordering 121a, tasking 121b and control 121c of an SAR sensor of, e.g., a satellite via transmitter 122. The SAR sensor of the space segment 130 performs the ordered tasks and, e.g., takes certain required SAR images. These images are sent to a receiver 123 located at the ground segment 120.

The ground segment 120 performs specific process such as instrument specific corrections 124, multimode correlation 125, multi-looking and beam stitching 126, geocoding 127 and product formatting 129. These processed data are then forwarded to the customer 110, who performs image analysis 113.

Ideally, the inventive processing step is incorporated in the image processing unit of the ground segment 120 as indicated in Fig. 1 with reference sign 128. Alternatively or additionally, it can be implemented as a separate image processing module 112 applied by the customer. In either case the system is an independent tool with an incoming data stream and an outgoing, improved data stream.

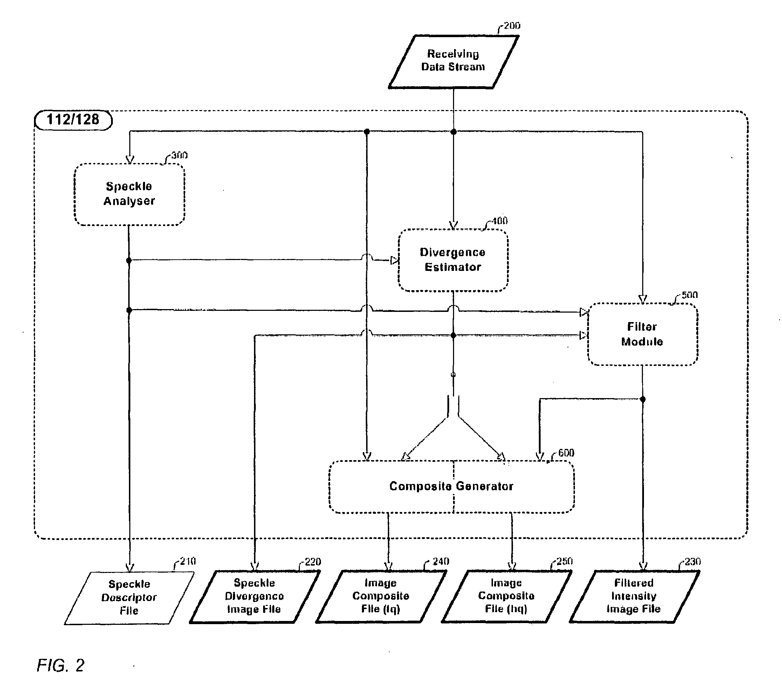

According to a preferred embodiment, the inventive device 112, 128 comprises four sub-modules with varying functions. A functional block diagram of device 112, 128 is shown in Fig. 2.

The speckle analyser module 300 receives the incoming SAR image data stream 200 for the analysis of the scene-specific CoV which is used for the divergence estimation 400. The output is a speckle descriptor file 210 which provides the basis for the automated adaption of the filter parameters in the context of the divergence estimation 400.

The divergence estimator 400 determines the spatially variable filter control signal on the basis of the deviation between the global CoV provided by the speckle analyser 300, and the locally determined CoV. In addition, this sub-module preferably includes a decomposition of the received SAR image data stream in order to optimise the processing of very large data sets.

The filter module 500 is the actual image smoothing device which filters the, preferably decomposed, input image by means of an adaptive filter kernel. This sub-module receives its input from the divergence estimator 400 in terms of the filter control signal and the decomposed input image. The output of the filter module 500 is a data stream 220 with significantly reduced speckle noise.

The composite generator 600 represents a device to create a colour composite image product based on the intensity image and a texture layer, i.e. the speckle divergence, derived from these intensity data.

The discussed modules of the apparatus according to the present invention preferably correspond to respective steps of the methods of the invention and vice versa.

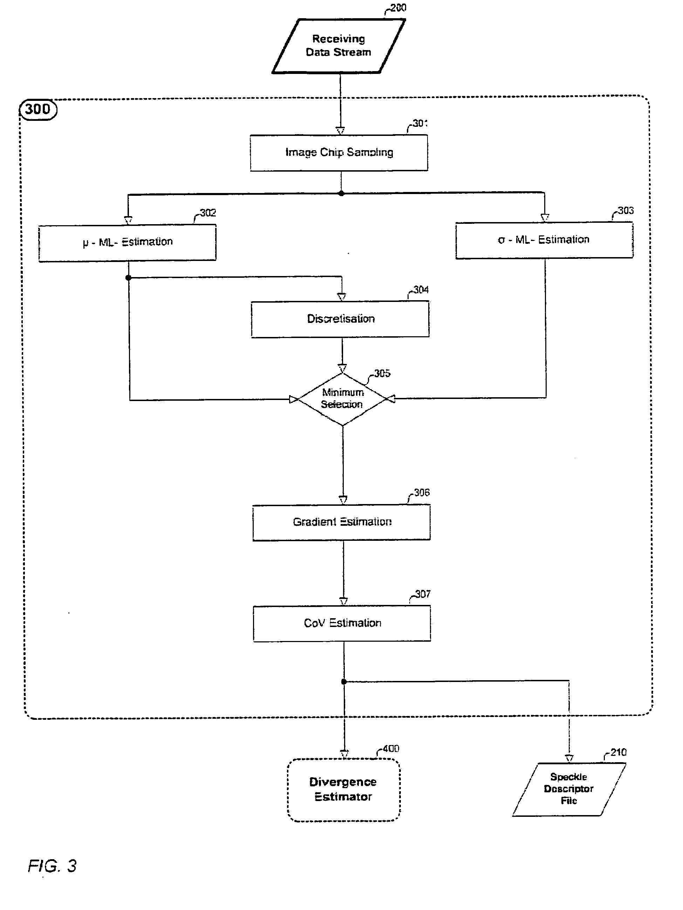

The speckle analyser 300 is a module that automatically identifies areas within the SAR image that feature fully developed speckle. Based on these regions the CoV is determined. The integration of the speckle analyser module 300 is illustrated in Fig. 3. The input to the speckle analyser is the received SAR data stream 200. The output of this module is the speckle descriptor file 210. The single processing operations performed by the speckle descriptor module 300 are described with reference to Fig. 3 where the internal process flow and all operational steps are illustrated.

The image chip sampling 301 defines a grid of quadratic first regions equally distributed over the entire image. These chips are chosen from the image such that their centre point is positioned on an equidistant sample grid with identical spacing in x and y imaging direction (exemplary first regions (chips) of the image shown in Fig. 4a have a size of 50 x 50 pixels and are identified as F4_01 therein). An appropriate chip or region size is between about 50 x 50 and 200 x 200 pixels, preferably between 80 x 80 and 120 x 120 pixels, for example about 100 x 100 pixels which ideally covers a quarter to a half of the sample grid spacing in order to facilitate fast but numerical stable processing.

The $\mu$-maximum-likelihood-estimation 302 estimates the mean backscatter value for each image chip. The result is shown in the $\mu$-$\sigma$ scatter plot shown in Fig. 4b, wherein each dot of the point cloud represents one of the first regions of Fig. 4a. The first percentile and the ninetieth percentile of all estimated means are used to specify the limits $\mu_{min}$ and $\mu_{max}$ of the valid mean range used for subsequent processing.

In the context of the discretisation 304 the chips are grouped according to their mean value $\mu$ whereas the group interval is defined by the discretisation width $\delta_\mu$. Within each group with index n all image chips with index i with a mean value $\mu_i$ are found in the range

$$(n-1)\delta_\mu \le \mu_i < n\delta_\mu \;, \; n = 1,2,3,.. \qquad (2)$$

Additionally, for all chips the standard deviation of the backscatter intensity is estimated using a $\sigma$-maximum-likelihood estimator 303. For each group with index $n$ the image chip with the minimum standard deviation $\sigma_{n,min}$ is selected in step 305. In Fig. 4b, this leads to the solid line identified as F4_02. The output is a set of tuples $T_{n,min}$:

$$T_{n,\min} = \{\mu_n | \sigma_{n,\min}\} \;\; with \;\; \sigma_{n,\min} = \min\left\{\sum_i \sigma_{n,i}\right\} \quad (3)$$

These tuples specify the lower boundary in the $\mu$-$\sigma$ scatter plot (cf. Fig. 4b) within the interval [$\mu_{min}$, $\mu_{max}$] and are referred to as lower boundary tuples. These tuples represent those image chips featuring a minimum $\sigma/\mu$-ratio and thus - most likely, but not necessarily - fully developed speckle. Fully developed speckle most frequently appears in open spaces (see crosses in Fig. 4c).

According to the concept of multiplicative speckle noise the ratio

$$C_n = \sigma_n / \mu_n \qquad (4)$$

is constant for all image chips featuring fully developed speckle, independent of their mean backscatter intensity. Any additional backscatter from true objects - e.g. in case of woodland or settlements - will increase this ratio. This can be seen in Figs. 4a, 4b and 4c. In Fig. 4a several regions are identified, which can be clearly classified in either water, woodland, settlement or open space. For example, the regions marked as F4_06, F4_07 and F4_08 refer to regions which can be classified as water, settlement and open space, respectively. The above-described analysis was performed on these "ideal" regions thus leading to points in the $\mu$-$\sigma$ scatter plot shown in Fig. 4c marked as crosses (water), triangles (woodland), diamonds (settlement) and plusses (open spaces),. As can be taken from those representative examples, signals from water and open space typically show a fully developed speckle pattern (in other words crosses and plusses are located close to the linear fit F4_03 representing the global CoV), whereas data from woodland and in particular settlements deviates from the fully developed speckle pattern (triangles and in particular diamonds are located well above the global CoV). Accordingly, this information can be used to identify, e.g., settlements.

For the final calculation of the CoV it is essential to select only those tuples from the set $T_{n,min}$ that represent image chips with fully developed speckle. When using a simple least squares estimator on all $T_{n,min}$, the result of the CoV estimation would strongly depend on the portion of image chips covering regions without any true structuring. In most cases it is impossible to have a representative image chip with fully developed speckle for every single $\sigma_n$.

In module 306 (cf. Fig. 3) two more processing steps are performed to select the appropriate lower boundary values for the final CoV estimation. First, a simple low pass filter is applied to the lower boundary values. Subsequently, only those lower boundary values whose difference between local gradient and global gradient is smaller than a given threshold $f$

$$\sum_{k=0}^{1}\left|\frac{\sigma_{n,\min}}{\mu_n}-\frac{\sigma_{n+k,\min}-\sigma_{n-1+k,\min}}{\mu_{n+k}-\mu_{n-1+k}}\right|<f \qquad (5)$$

facilitate a robust estimation of the CoV. Hence, only these values are used as an input for the CoV estimation in step 307. A reasonable value for the threshold f lies between 0.2 and 0.4, preferably between 0.25 and 0.35 and is preferably about 0.3. However, this value might be increased stepwise if the total number of valid estimates is lower than 2. The appropriate lower boundary tuples that have been accepted are finally used for the determination of the scene-specific CoV by means of the least squares fit 307. Figure 4b shows that the CoV estimated by means of the proposed procedure (dashed line identified as F4_03) fits the best, while established approaches such as the estimation by the equivalent number of looks (dashed line identified as F4_04) or the widely used image analysis software ERDAS (dashed line identified as F4_05) overestimate the true minimum level of speckle noise.

The output of the speckle analyser module is the speckle descriptor file 210 which provides the final estimate of the global CoV and additional parameters which specify the quality of the CoV estimation as well as secondary processing parameters. Furthermore this file contains an array defining the location of those image chips with fully developed speckle. The speckle descriptor file is input to the divergence estimator 400 and the filter module 500. It might preferably also be employed in further image processing by the costumer. Thus, the output file is preferably branched off and transferred to the general output level.

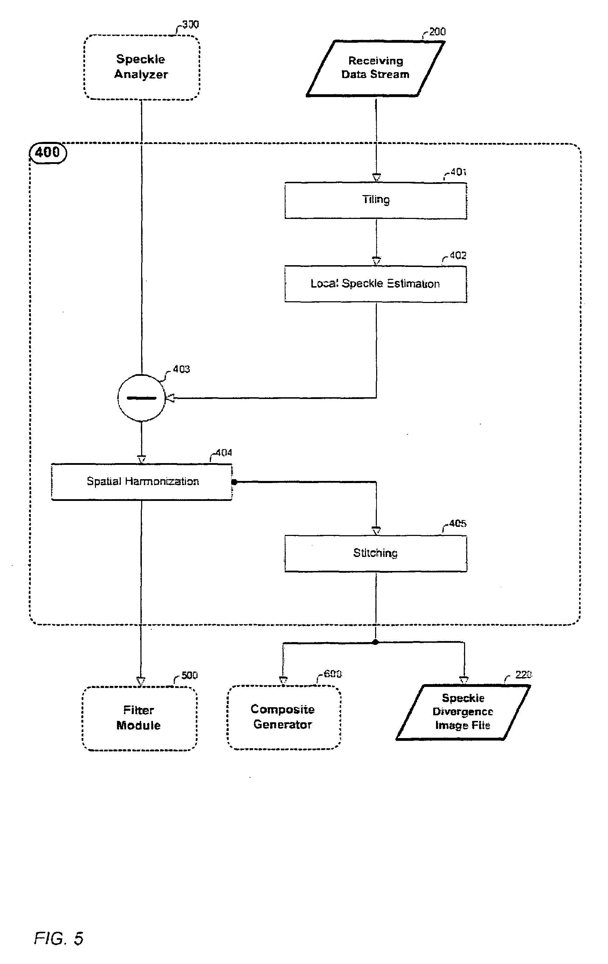

Fig. 5 illustrates the integration of the speckle divergence estimator module 400 in the context of this invention. The input to this module is the receiving data stream 200 and the output data of the speckle analyser module 300. The outputs of the divergence estimator module 400 are the so-called speckle divergence and the speckle divergence image file 220, respectively. The speckle divergence can be seen as a statistical parameter which describes the local speckle development i.e. the local divergence from the scene specific CoV. For homogeneous areas with fully developed speckle the divergence approaches a value of zero, whereas any structuring leads to an increase of the speckle divergence. The divergence estimator is implemented with the following processing steps:

The tiling process 401 divides the incoming SAR data stream 200 into subsets and stacks them as multi-band data for further processing. The subsets are passed consecutively through the subsequent processing modules.

The local speckle estimation 402 determines the CoV for each pixel (associated to a first region) based on a specific neighbourhood, i.e. the first region, of ideally 7x7 to 21x21 pixels. The local $c_{x,y}$ is calculated as the ratio of the local estimates of standard deviation $\sigma_{x,y}$ and mean $\mu_{x,y}$. The difference between scene-specific CoV ($C$) and locally estimated CoV ($c_{x,y}$) 402 is output of step 403.

$$d_{x,y}=\left|C-c_{x,y}\right| \; with \; \; c_{x,y}=\frac{\sigma_{x,y}}{\mu_{x,y}} \qquad (6)$$

The measure $d_{x,y}$ - referred to as speckle divergence - facilitates the effective quantification of the local similarity of the image signal and fully developed speckle. It represents an effective parameter to optimally adjust the intensity of the speckle suppression according to the probability in terms of fully developed speckle. Using the speckle divergence the pixels associated to said first regions can be classified and optionally colored or adjusted accordingly.

A harmonization operation 404 is inserted to attenuate the speckle divergence signal in order to obtain a locally variable but smooth variation of the speckle divergence function. The filter control function is consecutively convolved by a median and a mean kernel function. The smoothed speckle divergence signal is input to the filter module 500. In addition, the processed image segments are stitched together in step 405 and transferred as an input band to the composite generator 600. Furthermore the speckle divergence is preferably exported as speckle divergence image file 220. This file is preferably provided as an additional image product giving specific information on the true texturing of the SAR image data.

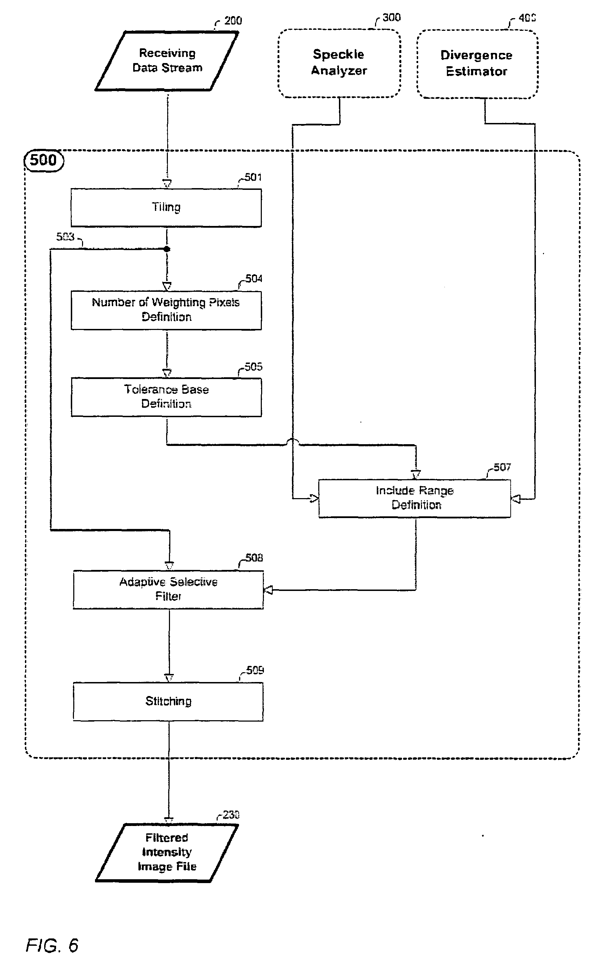

Figs. 2 and 6 illustrate the integration of the filter module 500 in the context of this invention. Inputs to the filter module 500 are the received SAR data stream 200, the scene-specific CoV determined by the speckle analyser 300 and the speckle divergence provided by the divergence estimator 400. The output of the filter module is the filtered intensity image file 230. The processing operations performed by the filter module are described with reference to Fig. 6, where the internal process flow and the main operational steps are shown.

The proposed speckle filter is realised as a selective mean filter algorithm. Any pixel can be defined by its intensity $I$ and its localisation in azimuth (x) and in range (y) in the following way

$$I_{x,y} = I(x,y) \qquad (7)$$

During the filter process, the intensity value of a given image pixel is replaced by the mean value $\hat{I}_{x,y}$ calculated on the basis of selected neighbouring pixels. Only those image pixels of the filter kernel featuring an intensity value within a certain bandwidth - called include range $R_{x,y}$ - with

$$R_{x,y} = [r_{x,y}^{\min}, r_{x,y}^{\max}] \qquad (8)$$

are selected for averaging. The include range can also be formulated as the sum of a tolerance base $t^b_{x,y}$ and a tolerance width $t^w_{x,y}$:

$$R_{x,y} = [t^b_{x,y} - t^w_{x,y}, t^b_{x,y} + t^w_{x,y}] \qquad (9)$$

Hence, the original pixel value $I_{x,y}$ is transformed to the smoothed value $\hat{I}_{x,y}$ by the filter function

$$\hat{I}_{x,y} = \frac{\sum\limits_{x=-m}^{m} \sum\limits_{y=-m}^{m} S^f_{x,y} I_{x,y}}{\sum\limits_{x=-m}^{m} \sum\limits_{y=-m}^{m} S^f_{x,y}} \qquad (10)$$

with

$$S^f_{x,y} = \begin{cases} 0 & , if\ (I_{x,y} < r_{x,y}^{\min}) \vee (I_{x,y} > r_{x,y}^{\max}) \\ 1 & , if\ r_{x,y}^{\min} \leq I_{x,y} \leq r_{x,y}^{\max}) \end{cases}$$

The parameter $n$ takes integer values and defines half the width of the quadratic search window, whereas the parameter $N$ represents the total number of pixels within this kernel:

$$(2n+1)^2 = N \qquad (11)$$

These specifications also apply to parameter $m$ representing the filter kernel.
Tolerance base as well as tolerance width are spatially varying parameters. They are combined in the controlling parameter of the include range $R_{x,y}$ which finally determines the local adaptation of the filter effect. The filter procedure comprises three main steps including the (i) estimation of the tolerance base $t_b$, the (ii) determination of the include range $R_{x,y}$ and the (iii) application of the selective mean filter algorithm.
The tolerance base is the midpoint of the include range $R_{x,y}$. From a statistical point of view and for a Gaussian distribution of image intensity the tolerance base can be interpreted as the mean value with the tolerance width $t_w$ representing a probability range in terms of the standard deviation. However, in terms of SAR speckle the intensity signal is Rayleigh distributed and the mean value is unknown.
Basically, the value of the centre pixel might be taken as tolerance base whereas the tolerance width defines the tolerable deviation of grey values (DN) around the tolerance base. This works well for pixels with an intensity value close to the sample mean of all neighbouring elements whereas this assumption fails for those pixels whose DN differs significantly from the average. Particularly for pixels featuring a very low DN, only very few pixels are found whose DN falls within the tolerance range. Hence, these elements will only be smoothed marginally in the context of the filtering procedure. This effect can be observed when applying the standard Lee Sigma filter. In this case areas of destructive interference remain as dark, isolated spots in the filtered image.

In case of this invention the tolerance base is preferably estimated via the definition of a local number of weights. This number is a measure that describes the similarity of neighbouring pixels. If all pixels within a defined window around the central pixel feature intensity values within a given range, the number of weights is maximal and the tolerance base for the central pixel will be almost equal to its actual intensity value. For a central pixel whose intensity differs significantly from the other pixels within the search window, the tolerance base for the central pixel will be the average of the central pixel's DN and those of the residual elements within the kernel.

Starting from $t$ the spatially varying number of weights $W^*_{x,y}$ is preferably derived via sub-module 504. First a local and thus spatially varying tolerance $t^*_{x,y}$ is calculated as a function of the CoV ($C$) 210, the speckle divergence $d_{x,y}$ 220 and user-defined divergence thresholds $d_{min}$, $d_{max}$ for a tolerance transition range.

$$t^*_{x,y} = \begin{cases} \delta_{base}C & ,if \ d_{x,y} < d_{min} \\ \delta_{base}C\left(1 - \dfrac{d_{x,y} - d_{min}}{d_{max} - d_{min}}\right) & ,if \ d_{min} \le d_{x,y} \le d_{max} \\ 0 & ,if \ d_{x,y} > d_{max} \end{cases} \quad (12)$$

The local tolerance $t^*_{x,y}$ is a variable value that is equal to $\delta_{base}C$ where the speckle divergence is below a given threshold $d_{min}$ and is equal to zero if the divergence is above the given value $d_{max}$. The range between $d_{min}$ and $d_{max}$ is characterised by a linear transition. The values for the thresholds $d_{min}$ and $d_{max}$ can vary according to the user's needs since these values govern the amount of smoothing which depends on the subjective user requirements. Preferred values for $d_{min}$ are between 0.05 and 0.2, more preferably about 0.1, and for $d_{max}$ between 0.5 and 0.7, more preferably about 0.6.

A valid include bandwidth $B_{x,y}$ is defined for every pixel depending on its intensity value and the previously defined local tolerance $t^*_{x,y}$

$$B_{x,y} = [b^{min}_{x,y}, b^{max}_{x,y}] = [I_{x,y} - t^*_{x,y} \ , \ I_{x,y} + t^*_{x,y}] \quad (13)$$

This bandwidth is similar to the include range $R_{x,y}$ in that it defines a valid include interval. But as $B_{x,y}$ defines an interval with the original intensity $I_{x,y}$ as central value, it must not necessarily be the middle of $R_{x,y}$. There might be situations where $I_{x,y}$ is even beyond the valid include range $R_{x,y}$ but still the central value of interval $B_{x,y}$.

Next, the number of weights $W_{x,y}$ can be calculated as follows:

$$W_{x,y} = \sum_{x=-n}^{n} \sum_{y=-n}^{n} S_{x,y} \quad (14)$$

with

$$S_{x,y} = \begin{cases} 0 & ,if \ (I_{x,y} < b^{min}_{x,y}) \vee (I_{x,y} > b^{max}_{x,y}) \\ 1 & ,if \ b^{min}_{x,y} \le I_{x,y} \le b^{max}_{x,y} \end{cases}$$

The number of weights is at least one in the case that no other pixel within the search window has an intensity which lies within the include range $R_{x,y}$. The theoretical maximum for $W_{x,y}$ is the total number of pixels in the search window, i.e. $(2n+1)^2$. This number of weights $W_{x,y}$ is a preliminary result to start with. It is further adjusted within sub-module 504.

An implementation as described in equations (13) and (14) may lead to undifferentiated smoothing of all localised features including speckle but also true structures. Hence, the weighting function is preferably adjusted according to the probability of real structuring within the local neighbourhood. Assuming that the existence of fully developed speckle indicates the absence of true structuring the speckle divergence (7) 220 represents an ideal measure to estimate the probability of real structuring. Hence, the weights are adjusted with respect to the local divergence whereas the number of weights is increased as soon as the speckle divergence exceeds the minimum threshold $d_{min}$. As a result the number of weights will increase for all outliers in heterogeneous areas ($d_{x,y} > d_{min}$) that feature a high speckle divergence - e.g. point scatterers:

$$W^{\bullet}_{x,y} = \begin{cases} W_{x,y} & , if \ \ d_{x,y} < d_{min} \\ W_{x,y} + \dfrac{d_{x,y} - d_{min}}{d_{max} - d_{min}}(N-1) & , if \ \ d_{min} \le d_{x,y} \le d_{max} \\ W_{x,y} + N - 1 & , if \ \ d_{x,y} > d_{max} \end{cases} \qquad (15)$$

The maximum possible value for the number of weights is limited to

$$W^{\bullet}_{x,y} \le N \qquad (16)$$

In step 505 the tolerance base $t^{b}_{x,y}$ is finally estimated for the pixel at location (x,y) as a function of the weighted sum of the central pixel $w^{c}_{x,y}$ and all neighbours within the tolerance base application window $w^{o}_{x,y}$ with size $(2n_a+1)x$ $(2n_a+1)$. The application window size $N_a=(2n_a+1)^2$ can be different from the window size used for the estimation of the number of weights $N=(2n+1)^2$. Based on $W^{*}_{x,y}$ two different weighting factors are calculated. One for the central pixel $(w^{c}_{x,y})$ and one for all other pixels within the application window $(w^{o}_{x,y})$.

$$w^{c}_{x,y} = \frac{W^{\bullet}_{x,y}}{N}(1-p) + p \qquad (17)$$

$$w^{o}_{x,y} = \frac{N - W^{\bullet}_{x,y}}{N(N_a - 1)} - W^{\bullet}_{x,y} \, p \, \frac{N-1}{N_a - 1} \qquad (18)$$

According to equations (17) and (18) the weighting for the central pixel is proportional to the number of weights, whereas the weighting for the outer pixels decreases with increasing $W^{*}_{x,y}$. If the number of weights $W^{*}_{x,y}$ is half the total number of estimation pixels (N), the central pixel will receive a weighting of 0.5 whereas the remaining weighting is equally distributed to the outer pixels i.e. $w^{o}_{x,y} = 0.5/(N_a-1)$. The controlling parameter p takes values within the range [0.1] and defines whether emphasis for the tolerance base is shifted towards the central weighting or not. If p is set to zero, the original weighting is kept, whereas a value of one yields a weighting of one for the central pixel, whereas all other pixels receive a weighting of zero.

Finally, based on $w^{o}_{x,y}$ and $w^{i}_{x,y}$, the tolerance base $t^{b}_{x,y}$ is calculated according to the following equation:

$$t_{x,y}^{b} = w_{x,y}^{p} I_{x,y} + w_{x,y}^{o} \left( -I_{x,y} + \sum_{k=-n_a}^{n_a} \sum_{l=-n_a}^{n_a} I_{x+k,y+l} \right) \quad (19)$$

Thus, the tolerance base is similar to the pixel intensity for the case that all pixels of the estimation window feature an intensity within the valid include bandwidth $B_{x,,y}$, whereas otherwise the tolerance base is a weighted mean of the central raster cell and its neighbouring pixels.

In step 507 the include range for the selective mean filter is defined on the basis of the defined tolerance base and tolerance width according to equation (9). The tolerance width controls the filter intensity and is initially derived from the speckle divergence. The values range between a minimum $\delta_{min} c_{x,y}$ and a maximum $\delta_{max} c_{x,y}$:

$$t_{x,y}^{w} = \begin{cases} \delta_{max} c_{x,y} & , if \ d_{x,y} < d_{min} \\ c_{x,y} \left[ \delta_{min} + \left( \delta_{max} - \delta_{min} \right) \left( 1 - \dfrac{d_{x,y} - d_{min}}{d_{max} - d_{min}} \right) \right] & , if \ d_{min} \leq d_{x,y} \leq d_{max} \\ \delta_{min} c_{x,y} & , if \ d_{x,y} > d_{max} \end{cases}$$

$$(20)$$

This equation is similar to the tolerance calculation in (12) except for the difference in the tolerance coefficients. According to (20) the tolerance width is always greater than zero - except for the case that the minimum tolerance is chosen to be zero ($\delta_{min} = 0$) -whereas in equation (12) the tolerance width is zero in case of the speckle divergence exceeding the threshold $d_{max}$.

Fig.6 illustrates the integration of the actual adaptive filter calculation 508 in the context of the filter module 500. Inputs to the adaptive filter are the tiled SAR image segments and the filter control signal in form of the locally variable include range $R_{x,y}$ derived in step 507. The output is the filtered SAR image segment.

The adaptive filter performs a convolution of the incoming SAR data with a two dimensional circular kernel function. The kernel operation is preferably selective such that for each single pixel at location $(x,y)$ the kernel weights are adjusted according to the include range $R_{x,y}$. All image pixels within the kernel window featuring a backscatter value within the local include range are used for the mean filtering. All other pixels are invalid and not used for the smoothing operation. Prior to the convolution the kernel is preferably dynamically normalized by the respective number of valid pixels as shown in equation (10).

Finally, the individually filtered image tiles are stitched together in processing step 509. The filtered intensity image 230 is output of the filter module 500.

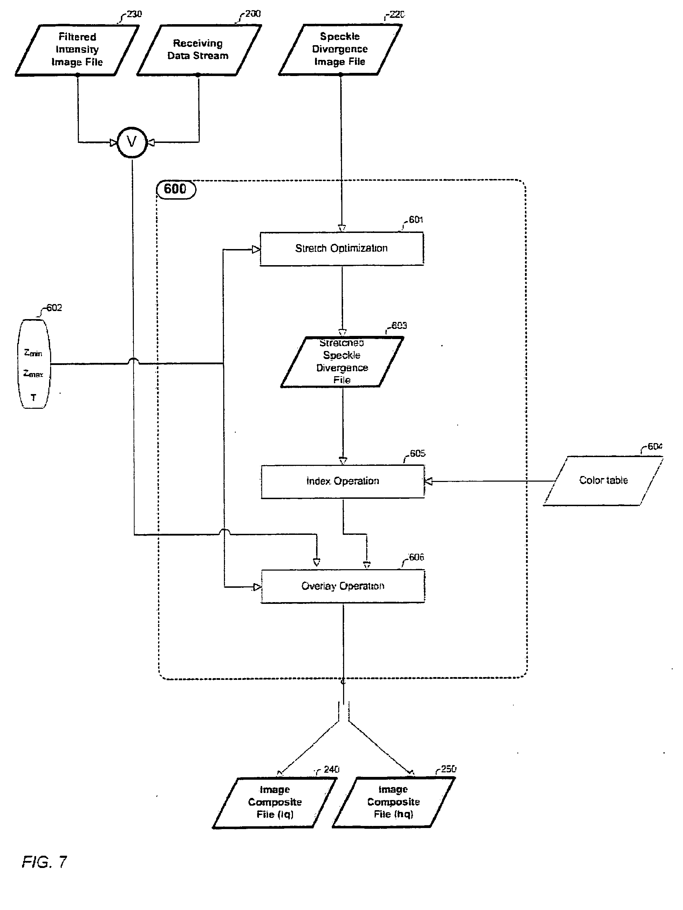

Figs. 2 and 7 illustrate the integration of the composite generator 600. The composite generator 600 creates a colour composite image product 240, 250, preferably based on the speckle divergence image file 220 and the information of either the original intensity image 200 or the filtered intensity data 230. The composite product 240 integrating the original intensity image 200 features a lower quality (lq) but is well suited for the generation of quicklook images. The high quality composite 250 is based on the integration of the filtered intensity image and thus preferably represents a substantial standard image product.

The first step of the module performs an optimised data stretch 601 for the speckle divergence data set. In this context an upper threshold $z_{max}$, e.g. for unsigned integer images between 50 and 200, preferably about 100, and a lower threshold $z_{min}$, e.g. for unsigned integer images between 3000 and 4000, preferably about 3500, are defined for the divergence image in order to define an appropriate range for a linear histogram stretch. The stretch itself is performed by the index brightness operation 606 which scales and classifies every element within the range on the basis of a given colour/brightness table 604. Finally, the image overlay operation 606 combines the stretched and colourised/brightness-adjusted speckle divergence image with the (filtered) intensity data - preferably in consideration of a specific transparency parameter (T) - and saves the resulting data set as an image composite file 240/250.

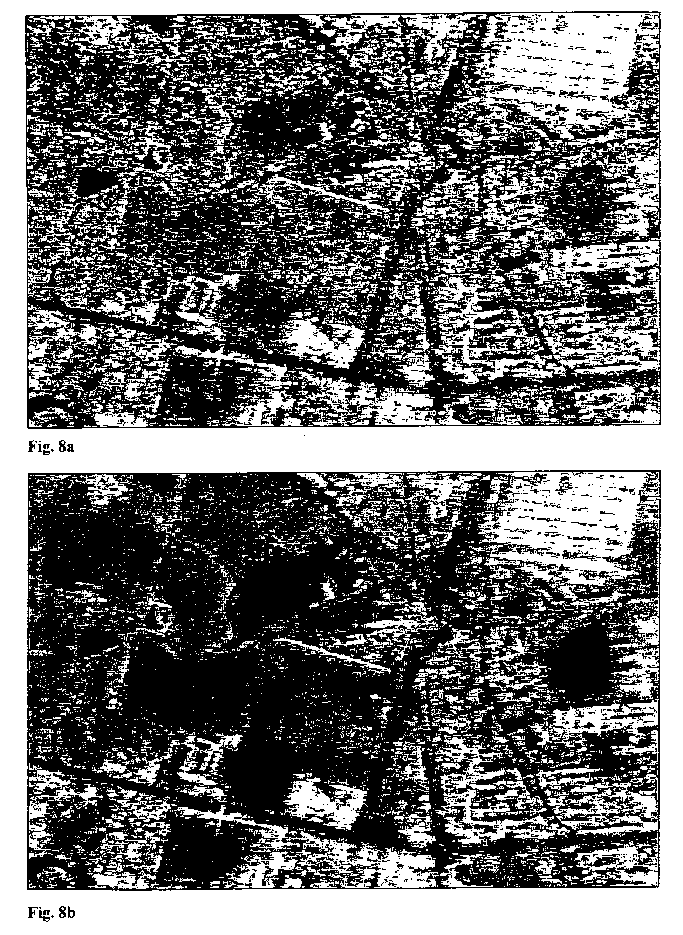

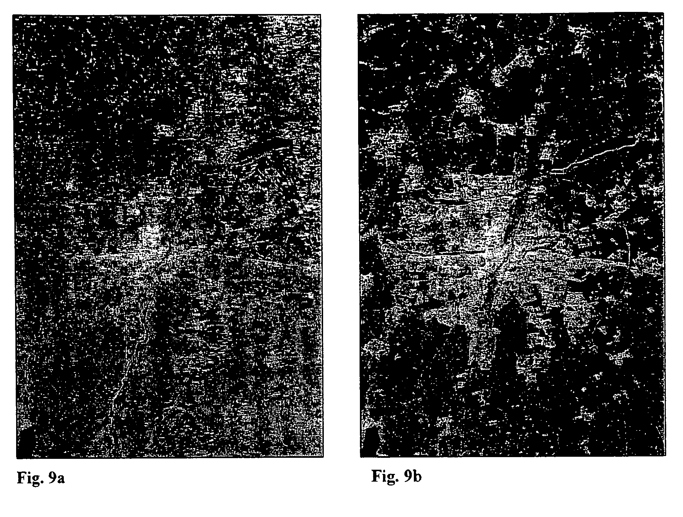

Figs. 8a and 9a show examples of an original SAR image recorded by the German TerraSAR-X satellite system corresponding to the receiving data stream 200. Figs. 8b and 9b show the respective images of Figs. 8a and 9a after processing according to the present invention. Fig. 8b shows a filtered image corresponding to the filtered intensity image file 230. Fig. 9b shows the speckle divergence image corresponding to the speckle divergence image file 220.

As can be taken from Fig. 8b, applying the filter according to the present invention clearly removes large portions of speckle noise leading to an improved image quality. In Fig. 9b, regions characterized by a large speckle divergence are highlighted according to the present invention. As can be taken from the comparison between Figs. 9a and 9b, the highlighted regions correspond very well to the areas of settlement.

Although the present invention has been described above in great detail with reference to the figures, it should be apparent to the skilled person that specific details of the exemplary implementation of the present invention can be varied without departing from the scope of the present invention. The present invention is directed to a general method and apparatus which are described in the claims and not restricted to the mathematical details of the described embodiments. It shall further be emphasized that the modules described above may be implemented in any combination as well as separately. For example, the module shown in Fig. 7 does fall under the scope of the present invention, even if used independent of the other modules described above. Furthermore it shall be emphasized that the invention is in general applicable to all data received by any coherent imaging system and not restricted to optical data or even SAR data. For example, the methods and systems described in the present invention may also utilize ultrasound. In the latter case speckles may be removed, e.g., in medical imaging systems in order to improve the quality of e.g., medical ultrasound images.

**Claims**

1. Method of adaptive removal of speckle noise in digital images, comprising the steps of:

   a) receiving a digital image;
   b) calculating a global estimate for the ratio between standard deviation and mean value of the brightness of said image;
   c) calculating a local estimate for the ratio between standard deviation and mean value of the brightness for predetermined first regions of said image, wherein at least one predetermined pixel is associated to each first region;
   d) calculating the difference between the global estimate and the local estimate for said first regions; and
   e) classifying said first regions and/or the predetermined pixels associated with said first regions depending on the calculated difference.

2. Method according to claim 1, further comprising the step of filtering the image, wherein a spatially adaptive filter and/or a radiometrically selective filter is used relying on the classification of said first regions.

3. Method according to claim 1 or 2, further comprising the step of adjusting the brightness and/or color of said pixels associated to said first regions according to the classification of said first regions.

4. Method according to claim 2 or 3, further comprising the step of combining at least two of the following images in order to generate a composite image: the original digital image, the filtered image, the original digital image with adjusted brightness and/or color, the filtered image with adjusted brightness and/or color.

5. Method according to any one of claims 1 to 4, wherein the size of the first regions is comparable or slightly smaller than the true size of the features of interest depicted within the digital image.

6. Method according to any one of the preceding claims, wherein the global estimate is calculated on the basis of second regions of the image, whose standard deviation is minimal.

7. Method according to claim 6, wherein the global estimate is calculated on the basis of those regions of the second regions only, whose local estimate for the ratio between standard deviation and mean value does not significantly differ from the local estimate of second regions with similar mean value.

8. Method according to any one of claims 6 to 7, wherein calculating the global estimate comprises fitting a line through the points representing the second regions in a standard deviation versus mean value plot.

9. Method according to any one of claims 2 to 8, wherein filtering is based on a selective mean filter algorithm.

10. Method according to claim 9, wherein filtering comprises the steps of estimating a tolerance base, determining an include range and applying the selective mean filter algorithm.

11. Method according to claim 10, wherein the tolerance base is calculated on the basis of the outcome of step d).

12. Method of producing an improved digital image, preferably according to any one of the previous claims, comprising the steps of:

a) receiving a digital image;
b) calculating speckle characteristics of said image for predetermined regions of said image, wherein at least one predetermined pixel is associated to each region;
c) classifying said regions and/or said predetermined pixels associated to said regions depending on the calculated speckle characteristics;
d) filtering the image in order to generate a filtered image, wherein an adaptive filter is used relying on the classification of said regions;
e) generating a second and/or third image by adjusting the brightness and/or color of said regions and/or of said predetermined pixels associated to said regions within the digital image and/or the filtered image according to the classification of said regions; and
f) combining at least two of the following images in order to generate a composite image: the original digital image, the filtered image, the original digital image with adjusted brightness and/or color, the filtered image with adjusted brightness and/or color.

13. Device for adaptive removal of speckle noise in digital images, particularly for performing a method according to any one of the proceeding claims, comprising:

a) means for receiving and processing a digital image;
b) means for calculating a global estimate for the ratio between standard deviation and mean value of the brightness of said image;
c) means for calculating a local estimate for the ratio between standard deviation and mean value of the brightness for predetermined regions of said image, wherein at least one predetermined pixel is associated to each region;
d) means for calculating the difference between the global estimate and the local estimate for said regions; and
e) means for classifying said regions and/or said predetermined pixels associated to said regions depending on the calculated difference.

14. Device according to claim 13, further comprising an adaptive filter which is adapted to utilize the classification of said regions.

15. Device for producing an improved digital image, particularly for performing a method according to any one of the proceeding claims, comprising:

a) means for receiving and processing a digital image;
b) means for calculating speckle characteristics of said image for predetermined regions of said image, wherein at least one predetermined pixel is associated to each region;
c) means for classifying said regions and/or said predetermined pixels associated to said regions depending on the calculated speckle characteristics;
d) an adaptive filter based on the classification of said regions;
e) means for generating a second and/or third image by adjusting the brightness and/or color of said regions and/or of said predetermined pixels associated to said regions within the digital image and/or the filtered image according to the classification of said regions; and
f) means for combining at least two of the following images in order to generate a composite image: the original digital image, the filtered image, the original digital image with adjusted brightness and/or color, the filtered image with adjusted brightness and/or color.

FIG. 1

EP 2 157 544 A1

FIG. 2

FIG. 3

Fig. 4

FIG. 5

FIG. 6

FIG. 7

Fig. 8a

Fig. 8b

Fig. 9a

Fig. 9b

Europäisches
Patentamt

European
Patent Office

Office européen
des brevets

## EUROPEAN SEARCH REPORT

**Application Number**

EP 08 01 6988

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | BRUNO AIAZZI, LUCIANO ALPARONE AND STEFANO BARONTI: "A hybrid despeckling filter driven by a novel homogeneity feature" SAR IMAGE ANALYSIS, MODELLING AND TECHNIQUES III (PROC. SPIE), vol. 4173, 25 September 2000 (2000-09-25), pages 43-53, XP002561574 Barcelona, Spain  DOI: 10.1117/12.410669 * Introduction * * Section 4; paragraph [0001] - paragraph [0003] * * Section 2 * * figure 4 * ----- | 1-15 | INV. G06T5/00 G06T5/50 |
| Y | TAUBER C ET AL: "Robust B-spline snakes for ultrasound image segmentation" COMPUTERS IN CARDIOLOGY, 2004 CHICAGO, IL, USA SEPT. 19-22, 2004, PISCATAWAY, NJ, USA,IEEE, 19 September 2004 (2004-09-19), pages 325-328, XP010814058 ISBN: 978-0-7803-8927-4 * page 1, left-hand column, paragraph 1 * ----- | 1-15 | |
| A | GERIG G ET AL: "NONLINEAR ANISOTROPIC FILTERING OF MRI DATA" IEEE TRANSACTIONS ON MEDICAL IMAGING, IEEE SERVICE CENTER, PISCATAWAY, NJ, US, vol. 11, no. 2, 1 June 1992 (1992-06-01), pages 221-232, XP000288458 ISSN: 0278-0062 * page 226, right-hand column, paragraph 1 * ----- -/-- | 6-7 | **TECHNICAL FIELDS SEARCHED (IPC)** G06T |

The present search report has been drawn up for all claims

| Place of search | Date of completion of the search | Examiner |
|---|---|---|
| Munich | 11 January 2010 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EUROPEAN SEARCH REPORT**

Application Number

EP 08 01 6988

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | BEAUREPAIRE L ET AL: "Identification of the nature of noise and estimation of its statistical parameters by analysis of local histograms" ACOUSTICS, SPEECH, AND SIGNAL PROCESSING, 1997. ICASSP-97., 1997 IEEE INTERNATIONAL CONFERENCE ON MUNICH, GERMANY 21-24 APRIL 1997, LOS ALAMITOS, CA, USA,IEEE COMPUT. SOC, US, vol. 4, 21 April 1997 (1997-04-21), pages 2805-2808, XP010225739 ISBN: 978-0-8186-7919-3 * Section 2 * | 6-7 | |
| X | ESCH T: "Automatisierte Analyse von Siedlungsflächen auf der Basis höchstauflösender Radardaten" DISSERTATION ZUR ERLANGUNG DES NATURWISSENSCHAFTLICHEN DOKTORGRADES DER BAYERISCHEN JULIUS-MAXIMILIANS UNIVERSITÄT WÜRZBURG,, 1 May 2006 (2006-05-01), pages 1-219, XP007911019 * Section 4.1.1 * | 9-11 | TECHNICAL FIELDS SEARCHED (IPC) |
| A | ESCH T ET AL: "Analysis of Urban Land Use Pattern Based on High Resolution Radar Imagery" GEOSCIENCE AND REMOTE SENSING SYMPOSIUM, 2006. IGARSS 2006. IEEE INTER NATIONAL CONFERENCE ON, IEEE, PI, 1 July 2006 (2006-07-01), pages 3615-3618, XP031179804 ISBN: 978-0-7803-9510-7 * Section IV.A. * | 9-11 | |

The present search report has been drawn up for all claims

| Place of search | Date of completion of the search | Examiner |
|---|---|---|
| Munich | 11 January 2010 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Speckle suppression and analysis for synthetic aperture radar images. *Optical Engineering,* 1986, vol. 25 (5), 636-643
- **Frost et al.** An adaptive filter for smoothing noisy radar images. *Proceedings of the IEEE,* 1981, vol. 69 (1
- **Lee et al.** Digital image enhancement and noise filtering by use of local statistics. *IEEE Trans. Pattern Analysis and Machine Intelligence,* 1980, vol. 2 (2
- Unsupervised Estimation of Speckle Noise in Radar Images. *International Journal of Imaging Systems and Technology,* vol. 4, 298-305